# EUROPÄISCHE PATENTANMELDUNG

(11) **EP 1 103 982 A1**
(43) Veröffentlichungstag der Anmeldung: **30.05.2001**
(21) Anmeldenummer: 00124752.7
(22) Anmeldetag: 13.11.2000
(51) Int. Cl.: G21C 17/01, G01B 11/27

(54) **Verfahren und Vorrichtung zur Positionskontrolle von Kerneinbauten**

(30) Priorität: 25.11.1999 DE 19956724
(71) Anmelder: SIEMENS AKTIENGESELLSCHAFT, 80333 München (DE)
(72) Erfinder: Forster, Josef, 96114 Hirschaid (DE); Henglein, Rudolf, 91361 Pinzberg (DE); Meier-Hynek, Konrad, 91074 Herzogenaurach (DE); Schütt, Jürgen, 91074 Herzogenaurach (DE)

(57) **Zusammenfassung**

Bei dem Verfahren zur Positionskontrolle von Kerneinbauten in einem Reaktordruckbehälter (2), insbesondere von Antriebsstangen (16,16A) für Steuerstäbe (14), wird mittels eines optischen Systems (32) die Position der Antriebsstangen (16,16A) relativ zu einem Bezugspunkt (18,18A) bestimmt. Dies erfolgt vorzugsweise bei einer Revision unmittelbar vor dem Aufsetzen des Deckels (4) des Reaktordruckbehälters (2) und gewährleistet ein sicheres Einfädeln der Antriebsstangen (16,16A) in die am Deckel (4) angeordneten Steuerantriebsstutzen (20).

## Beschreibung

Die Erfindung betrifft ein Verfahren zur Positionskontrolle von Kerneinbauten in einem Reaktordruckbehälter einer Kernkraftanlage, insbesondere zur Positionskontrolle von Antriebsstangen für Steuerstäbe. Die Erfindung betrifft weiterhin eine Vorrichtung zur Positionskontrolle von Kerneinbauten in einer kerntechnischen Anlage, wobei die Vorrichtung insbesondere zur Durchführung des Verfahrens dient.

Bei einer kerntechnischen Anlage, insbesondere bei einem Druckwasserreaktor, werden die beim Betrieb im Reaktordruckbehälter des Reaktors angeordneten Kerneinbauten im Rahmen einer Revision in regelmäßigen Abständen überprüft. Dies wird in der Regel gemeinsam mit einem Brennelementwechsel durchgeführt. Hierzu wird zur Inspektion der Kerneinbauten und zum Austausch der Brennelemente der Deckel des Reaktordruckbehälters abgenommen, so dass dessen Innenraum von oben zugänglich ist. Bei einem Druckwasserreaktor sind durch den Deckel des Reaktordruckbehälters eine Vielzahl von Antriebsstangen geführt, die innerhalb des Reaktordruckbehälters mit Steuerstäben gekuppelt und außerhalb mit Steuerstabantrieben verklinkt sind. Die Antriebsstangen sind durch Führungselemente, den sogenannten Steuerstabführungseinsätzen, geführt, die vom oberen Kerngitter im Reaktordruckbehälter getragen werden. Bei einer Revision wird der Deckel des Reaktordruckbehälters zusammen mit den Steuerstabantrieben von den Antriebsstangen abgezogen, so dass diese vertikal nach oben stehen. Anschließend werden die Antriebsstangen von den Steuerstäben entkuppelt und zusammen mit dem oberen Kerngitter herausgehoben, so dass die Brennelemente zugänglich sind. Nach den Revisionsarbeiten werden diese Schritte in umgekehrter Reihenfolge durchgeführt.

Ein Problem stellt hierbei das Aufsetzen des Deckels des Reaktordruckbehälters dar, da die einzelnen Antriebsstangen durch den Deckel hindurchgeführt werden müssen. Hierzu sind an der Unterseite des Deckels Einführtrichter vorgesehen, die ein Einfädeln der Antriebsstangen in die für sie vorgesehenen Steuerantriebstutzen erleichtern. Es besteht hierbei jedoch die Gefahr, dass die Antriebsstangen nicht in den Einführtrichter einfädeln, beispielsweise aufgrund einer Verbiegung der Antriebsstange. Ein nicht erfolgtes Einfädeln führt beim Aufsetzen des Deckels zu einem Verbiegen der Antriebsstange. Dieses wird in der üblichen Funktionsprüfung vor dem eigentlichen Anfahren des Reaktors bemerkt. Um in diesem Fall die fehlerhafte Antriebsstange auszutauschen, muss der Reaktordruckbehälter erneut geöffnet werden. Dies ist mit einer höheren Stillstandszeit während einer Revision verbunden und führt damit zu höheren Kosten.

Der Erfindung liegt die Aufgabe zugrunde, eine sichere und störungsfreie Handhabung einer kerntechnischen Anlage zu ermöglichen, und insbesondere ein sicheres Einfädeln der Antriebsstangen durch den Deckel des Reaktordruckbehälters zu gewährleisten.

Die Aufgabe wird gemäß der Erfindung gelöst durch ein Verfahren zur Positionskontrolle von Kerneinbauten in einem Reaktordruckbehälter in einer Kernkraftanlage, insbesondere durch ein Verfahren zur Positionskontrolle von Antriebsstangen für Steuerstäbe, wobei mittels eines optischen Systems die Position eines jeweiligen Kerneinbauteils relativ zu einem Bezugspunkt bestimmt wird.

Es erfolgt also eine optische Positionskontrolle, die den entscheidenden Vorteil bietet, dass Abweichungen von einer Sollposition möglichst frühzeitig erkannt werden, wodurch Schäden und unnötige Kosten vermieden sind.

In einer bevorzugten Ausführungsform weist das optische System eine insbesondere elektronische Kamera auf, mit der Bilddaten erfasst werden. Die Kamera wird hierzu mittels eines Fahrelements über dem jeweiligen Kerneinbauteil ausgerichtet. Diese visuelle Inspektion ermöglicht ein schnelles und einfaches Erfassen der Position des Kerneinbauteils durch das Betriebspersonal.

Um die Relativposition zwischen Bezugspunkt und Kerneinbauteil mit ausreichender Genauigkeit bestimmen zu können, ist bevorzugt eine lotrechte Ausrichtung der optischen Achse der Kamera vorgesehen. Dies ist insbesondere bei der Überprüfung der Position von Antriebsstangen bezüglich ihrer Führungselemente, die als Bezugspunkt dienen, von großer Wichtigkeit. Denn das obere Ende der jeweiligen Antriebsstange und das ihm zugeordnete Führungselement sind mehrere Meter voneinander beabstandet, so dass bereits eine geringe Neigung der Kamera gegenüber der Lotrechten zu einem ungenauen Ergebnis führt.

Um insbesondere in diesem Fall, wenn also Bezugspunkt und Kerneinbauteil axial voneinander beabstandet sind, eine wechselweise Fokussierung auf den Bezugspunkt bzw. auf das Kerneinbauteil zu ermöglichen, ist in einer vorteilhaften Ausführung ein Zielfernrohr vorgesehen. Der entscheidende Vorteil der Verwendung eines Zielfernrohrs liegt darin, dass dieses eine ausreichend hohe Güte aufweist und für alle Fokussierungseinstellungen eine weitgehend identische optische Achse aufweist. Bei herkömmlichen in Überwachungskameras eingesetzten Fokussierungssystemen ist dies in der Regel nicht gegeben. Bei ihnen wird beim Fokussieren auf unterschiedliche Weiten die optische Achse in ihrer Lage geringfügig verändert. Solche herkömmlichen Überwachungssysteme sind daher zur Positionskontrolle im vorliegenden Fall aufgrund der großen axialen Beabstandung zwischen Bezugspunkt und Kerneinbauteil nicht geeignet.

Zur einfachen Ermittlung, ob sich das Kernbauteil innerhalb eines vorgegebenen Toleranzbereichen befindet, wird in dem von der Kamera erfassten Bildbereich ein Fadenkreuz eingeblendet, welches die maximal zulässige Abweichung des jeweiligen Kerneinbauteils aus der Sollposition angibt. Dieses Fadenkreuz dient bevorzugt zugleich zur Ausrichtung der Kamera über dem jeweiligen Kerneinbauteil. In einer zweckdienlichen Ausgestaltung ist es justierbar, um eine Anpassung an unterschiedliche Geometrien zu ermöglichen.

Vorzugsweise wird das Verfahren bei einer Revision nach der letztmaligen Handhabung des zu überprüfenden Kerneinbauteils und vor dem Aufsetzen des Deckels des Reaktordruckbehälters vorgenommen. Nach der Positionskontrolle wird das Kerneinbauteil also nicht mehr betätigt. Es bleibt in der überprüften Position stehen.

Aus Gründen der Zeit- und Kostenersparnis wird vorzugsweise parallel zur Positionskontrolle eine Gängigkeitskontrolle durchgeführt, wobei die Positionskontrolle an einem jeweiligen Kerneinbauteil erst nach dessen Gängigkeitskontrolle erfolgt. Bei einer Revision werden vor dem Aufsetzen des Dekkels in der Regel die Steuerstäbe im Hinblick auf ihre Funktion (Freigängigkeit) überprüft. Hierzu werden die Steuerstäbe im Rahmen der Gängigkeitskontrolle mit Hilfe der Antriebsstangen überprüft. Trotz der Vielzahl der Steuerstäbe und Antriebsstangen, deren Handhabung und Position überprüft werden, erfordert die zusätzliche Positionskontrolle nur einen geringen zusätzlichen Zeitaufwand, da sie im Wesentlichen während der Handhabungskontrolle durchgeführt wird.

Ebenfalls aus Gründen der Zeit- und Kostenersparnis wird die lotrechte Ausrichtung und ggf. eine Justage des Fadenkreuzes einmalig vor der ersten Positionsbestimmung und gleichzeitig mit einer weiteren Revisionsarbeit, beispielsweise dem Brennelementwechsel, durchgeführt. Sämtliche Justage- und Einstellmaßnahmen werden also vor dem Beginn der eigentlichen Durchführung der Positionskontrolle vorgenommen. Eine zeitaufwendige Justage während der einzelnen Positionsbestimmungen ist dann nicht mehr erforderlich.

Um Veränderungen und mögliche Schäden an den Antriebsstangen frühzeitig zu erkennen, ist in einer bevorzugten Ausführung vorgesehen, dass die Positionsdaten des jeweiligen Kerneinbauteils aufgenommen werden, um sie mit den erfassten Positionsdaten früherer oder künftiger Positionskontrollen vergleichen zu können. Zweckdienlicherweise wird hierzu ein Video-band mitgeschnitten.

Die Aufgabe wird gemäß der Erfindung weiterhin gelöst durch eine Vorrichtung zur Positionskontrolle von Kerneinbauten in einer kerntechnischen Anlage, wobei die Vorrichtung insbesondere zur Durchführung des Verfahrens zur Positionskontrolle dient und ein optisches System aufweist, welches umfasst eine Kamera zur Aufnahme von Bilddaten, Mittel zur lotrechten Ausrichtung der optischen Achse der Kamera und eine Zieloptik zur Fokussierung.

Mit einer derartigen Vorrichtung lässt sich das oben beschriebene Verfahren in geeigneter Weise durchführen. Weitere bevorzugte Ausführungsformen sind den Unteransprüchen zu entnehmen. Die im Hinblick auf das Verfahren aufgeführten Vorteile und zweckdienlichen Ausgestaltungen sind sinngemäß auf die Vorrichtung zu übertragen.

Ein Ausführungsbeispiel der Erfindung wird im Folgenden anhand der Zeichnung näher erläutert. Es zeigen jeweils in schematischen Darstellungen:
- FIG 1: einen ausschnittsweise dargestellten Reaktordruckbehälter mit teilweise abgehobenen Deckel,
- FIG 2: eine ausschnittsweise Darstellung des Reaktordruckbehälters in einem Sicherheitsbehälter bei abgehobenem Deckel,
- FIG 3: eine Draufsicht auf eine in einem Führungselement geführte Antriebsstange, und
- FIG 4: eine Vorrichtung zur Positionskontrolle.

Gleichwirkende Teile sind in den Figuren mit den gleichen Bezugszeichen versehen.

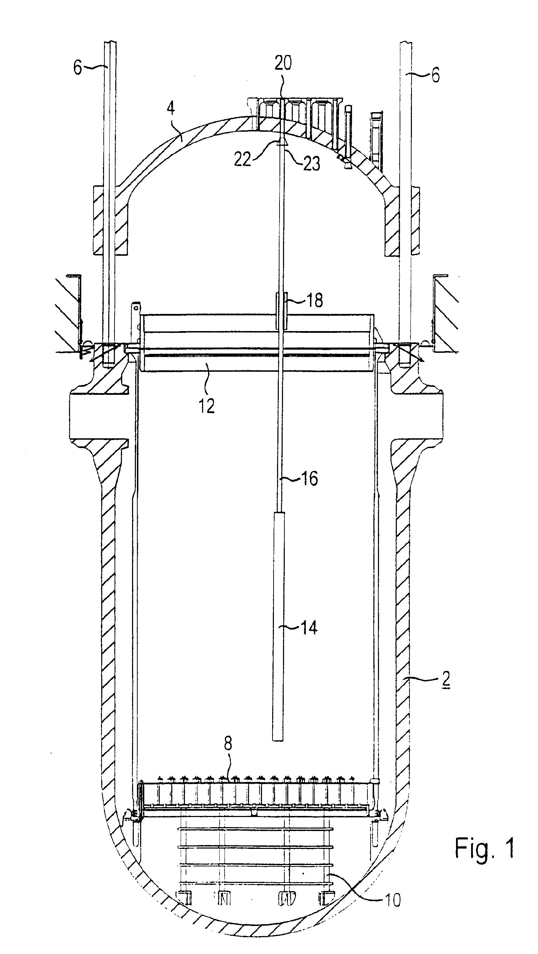

Gemäß FIG 1 weist ein Reaktordruckbehälter 2, insbesondere eines Druckwasserreaktors, einen abnehmbaren Deckel 4 auf, welcher entlang von Führungsstangen 6 verschiebbar ist.

Innerhalb des Reaktordruckbehälters 2 sind mehrere Kerneinbauten angeordnet. Diese umfassen ein unteres Kerngitter 8, welches auf einem Haltegestell 10 abgestützt ist, sowie ein oberes Kerngerüst 12. Zwischen den beiden Kerngerüsten 8,12 ist der nicht dargestellte Reaktorkern mit den Brennelementen angeordnet. Zur Leistungsregulierung des Reaktorkerns sind eine Vielzahl von Steuerstäben 14 und Antriebsstangen 16 vorgesehen, von denen in der FIG 1 beispielhaft jeweils nur einer bzw. eine skizziert ist. Der Steuerstab 14 ist mit der ihm zugeordneten Antriebsstange 16 gekuppelt, welche durch das obere Kerngitter 12 und insbesondere durch ein am oberen Kerngitter 12 angeordnetes Führungselement 18 hindurchgeführt ist. Bei montiertem Deckel 4 ist jede Antriebsstange 16 durch einen am Deckel 4 angeordneten Steuerantriebstutzen 20 hindurchgeführt. Die Antriebsstange 16 wird oberhalb des Dekkels 4 über eine Verklinkungsvorrichtung mit einem nicht gezeigten Steuerstabantrieb verbunden. Zum Innenraum des Reaktordruckbehälters 2 hin weist der Steuerantriebstutzen 20 einen Einführtrichter 22 auf, der beim Aufsetzen des Deckels 4 das Einfädeln der Antriebsstange 16 mit ihrem oberen Endbereich 23 in den Steuerantriebsstutzen 20 gewährleisten soll.

Ist jedoch die Antriebsstange 16 beispielsweise aufgrund von Handhabungsvorgängen verbogen, besteht die Gefahr, dass sie nicht in den Einführtrichter 22 einfädelt.

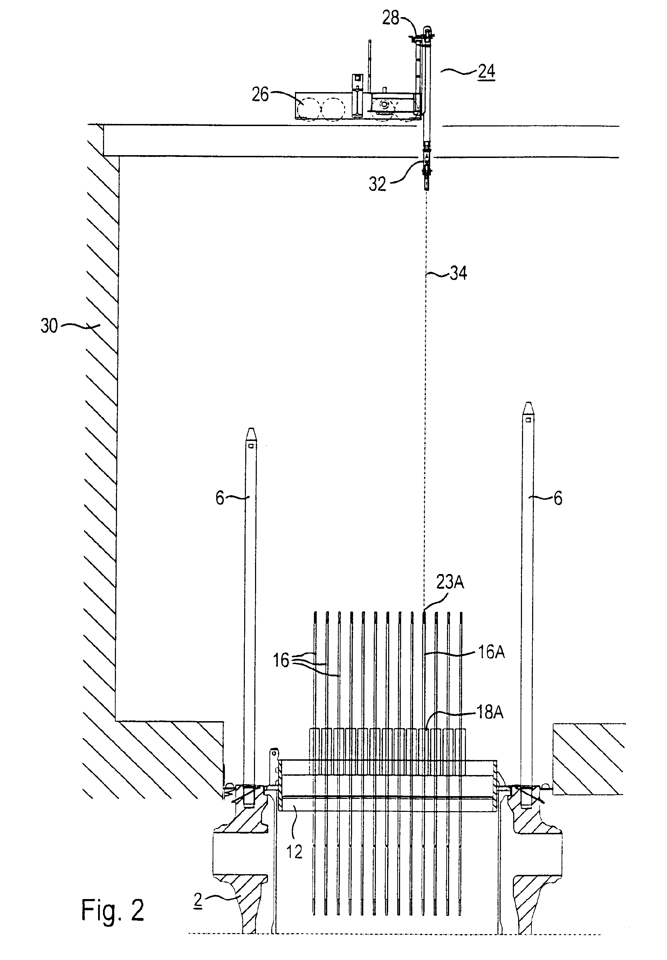

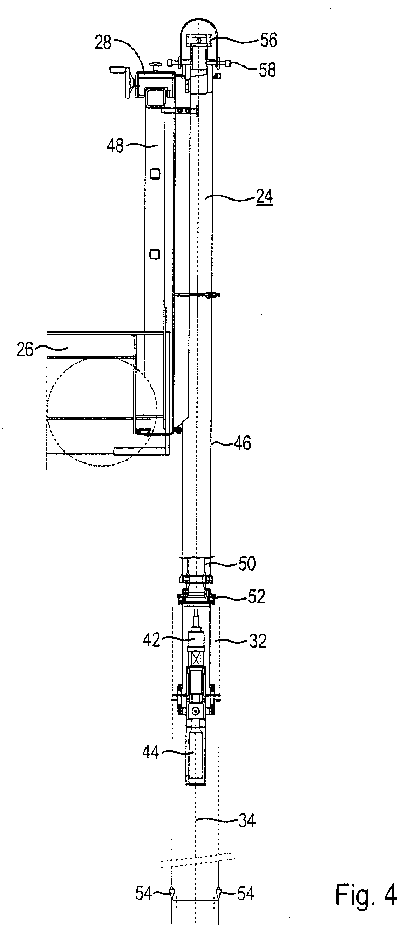

Um vor dem Aufsetzen des Deckels 4 zu erkennen, ob der einzufädelnde Endbereich 23 der Antriebsstange 16 außerhalb eines Toleranzbereiches positioniert ist, wird die Position jeder einzelnen Antriebsstange 16 vor dem Aufsetzen des Deckels 4 mit einer Vorrichtung 24 zur optischen Positionskontrolle überprüft, wie sie in FIG 2 und FIG 4 dargestellt ist.

Die Vorrichtung 24 ist gemäß FIG 2 auf einer Fahrbrücke 26, insbesondere auf einer Hilfsfahrbrücke, mittels eines Fahrwagens 28 beweglich angeordnet. Die Fahrbrücke 26 ist innerhalb eines - hier nur ausschnittsweise dargestellten - Sicherheitsbehälters 30 oberhalb des Reaktordruckbehälters 2 angeordnet. Mit Hilfe der Fahrbrücke 26 in Verbindung mit der fahrbaren Ausgestaltung der Vorrichtung 24 entlang der Fahrbrücke 26 können sämtliche Positionen oberhalb des Reaktordruckbehälters 2 angefahren werden, so dass jede Antriebsstange 16 erreichbar ist.

Die Vorrichtung 24 umfasst ein optisches System 32, dessen optische Achse 34 exakt lotrecht ausgerichtet ist. Zur Positionskontrolle wird die Vorrichtung 24 mit ihrer optischen Achse 34 sukzessive über jede der Antriebsstangen 16 gefahren. Gemäß FIG 2 befindet sie sich über der Antriebsstange 16A. Mit Hilfe des optischen Systems 32 wird dann die Relativposition des oberen Endbereichs 23A der Antriebsstange 16A zu ihrem Führungselement 18A bestimmt.

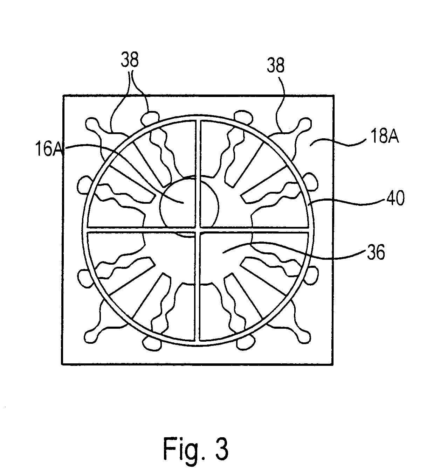

Hierzu wird die Draufsicht von dem optischen System 32 gemäß FIG 3 abgebildet. Aus FIG 3 ist das im Querschnitt gesehen quadratische Führungselement 18A zu entnehmen, welches eine zentrale Führung 36 für die Antriebsstange 16A aufweist. Radial zu der zentralen Führung 36 sind mehrere Führungskanäle 38 für Steuerstäbe 14 angeordnet. In dem vom optischen System 32 erfassten Bildbereich ist ein Fadenkreuz 40 eingeblendet. Dieses dient einerseits zur Justierung des optischen Systems bezüglich des Führungselements 18A. Es dient andererseits zur Überprüfung, ob die Antriebsstange 16A innerhalb eines Toleranzbereichs liegt, der mit dem vom Fadenkreuz 40 umrissenen Bereich übereinstimmt. Gemäß FIG 3 ist die Antriebsstange 16A zwar außermittig in der Führung jedoch innerhalb des über das Fadenkreuz 40 definierten Toleranzbereichs positioniert. Das Fadenkreuz 40 ist vorzugsweise elektronisch in den Bildbereich einblendbar und bezüglich seiner Größe justier- und einstellbar. Die Vorrichtung 24 ist daher universell bei Reaktordruckbehältern 2 mit unterschiedlichen Geometrien einsetzbar.

Die Vorrichtung 24 ist in FIG 4 vergrößert dargestellt. Hieraus ist zu entnehmen, dass das optische System 32 eine Kamera 42 und dieser in Richtung der optischen Achse 34 vorangeordnet ein Zielfernrohr 44 aufweist. Die Kamera 42 und das Zielfernrohr 44 sind über ein Tragrohr 46 an einem Träger 48 befestigt, welcher mit dem auf der Fahrbrücke 26 angeordneten Fahrwagen 28 verbunden ist. Der Träger 48 umfasst insbesondere das Geländer der Fahrbereiche 26. Die Kamera 42 und das Zielfernrohr 44 sind im Tragrohr 46 über ein Kardangelenk 50 und ein Drehlager 52 drehbar gelagert. Dies ermöglicht in vorteilhafter Weise eine Überprüfung der lotrechten Ausrichtung der optischen Achse 34, indem Kamera 42 und Zielfernrohr 44 beispielsweise um 180° gedreht werden. Denn für eine genaue Positionsbestimmung des Endbereichs 23A der Antriebsstange 16A ist aufgrund dessen axialer Beabstandung zum Führungselement 18A die lotrechte Ausrichtung der optischen Achse 34 von enormer Bedeutung. Die lotrechte Ausrichtung kann zusätzlich durch Lotsenkel 54 überprüft werden. Die Ausrichtung der optischen Achse 34 in lotrechter Richtung erfolgt über dafür vorgesehene Mittel oberen Bereich und im Kopf des Tragrohrs 46. Diese Mittel umfassen im Wesentlichen zwei senkrecht zueinander angeordnete Libellen 56, die nach Art einer Wasserwaage ausgebildet sind, sowie Justierschrauben 58, über die das Tragrohr 46 am Träger 48 befestigt ist. Die Libellen 56 ermöglichen insbesondere eine lotrechte Ausrichtung mit einer Genauigkeit von 0,lmm pro Meter. Aufgrund der hohen Anforderung an die lotrechte Ausrichtung eignen sich sogenannte Zielkameras oder auch Schwenkneigekameras nur bedingt. Die Kombination aus Kamera 42 und Zielfernrohr 44 ist besonders zweckdienlich.

Bei der Durchführung einer Revision wird folgendermaßen vorgegangen: Zunächst wird der Deckel 4 abgenommen, so dass die Antriebsstangen 16 senkrecht freistehend sind. Die Kopplung zwischen Antriebsstangen 16 und Steuerstäben 14 wird gelöst und die Antriebsstangen 16 werden zusammen mit dem oberen Kerngitter 12 entfernt, so dass die Brennelemente zugänglich sind und ausgetauscht werden können. Nach erfolgtem Austausch wird in umgekehrter Reihenfolge vorgegangen, d.h. das obere Kerngitter 12 wird wieder eingesetzt, und die Antriebsstangen 16 an die Steuerstäbe 14 angekuppelt. Vor dem Aufsetzen des Deckels 4 wird nun sowohl eine Handhabungs- als auch eine Positionskontrolle der Antriebsstangen 16 durchgeführt. Die Handhabungskontrolle dient zur Überprüfung, ob die Kupplung zwischen Antriebsstange 16 und Steuerstab 14 tatsächlich erfolgt ist. Diese Handhabungskontrolle wird für die einzelnen Steuerstäbe 14 sukzessive durchgeführt. Gleichzeitig mit der Handhabungskontrolle erfolgt die Positionskontrolle derjenigen Antriebsstangen 16, bei denen die Handhabungskontrolle bereits durchgeführt wurde, so dass der Zeitaufwand für die Positionskontrolle möglichst gering ist. Nach erfolgter Positionskontrolle wird die jeweils überprüfte Antriebsstange 16 nicht mehr betätigt bis der Deckel 4 aufgesetzt wird. Die Überprüfung der Position der Antriebsstangen 16 stellt sicher, dass die Antriebsstangen 16 beim Aufsetzen des Dekkels 4 sicher in den Einführtrichter 22 einfädeln.

## Patentansprüche

1. Verfahren zur Positionskontrolle von Kerneinbauten (16,16A) in einem Reaktordruckbehälter (2) einer Kernkraftanlage, insbesondere zur Positionskontrolle von Antriebsstangen (16,16A) für Steuerstäbe (14), wobei mittels eines optischen Systems (32) die Position eines jeweiligen Kerneinbauteils (16A) relativ zu einem Bezugspunkt (18A) bestimmt wird.

2. Verfahren nach Anspruch 1, bei dem das optische System (32) eine Kamera (42) umfasst, welche zur Positionsbestimmung mittels eines Fahrelements (28) über dem jeweiligen Kerneinbauteil (16A) ausgerichtet wird.

3. Verfahren nach Anspruch 2, bei dem die optische Achse (34) der Kamera (42) lotrecht ausgerichtet wird.

4. Verfahren nach Anspruch 2 oder 3, bei dem der Bezugspunkt (18A) und das jeweilige Kerneinbauteil (16A) in Richtung der optischen Achse (34) axial voneinander beabstandet sind, und bei dem mittels eines Zielfernrohrs (44) eine Fokussierung auf den Bezugspunkt (18A) einerseits und auf das jeweilige Kerneinbauteil (16A) andererseits vorgenommen wird.

5. Verfahren nach einem der Ansprüche 2 bis 4, bei dem in dem von der Kamera (42) erfassten Bildbereich ein Fadenkreuz (40) eingeblendet wird, welches die maximal zulässige Abweichung des jeweiligen Kerneinbauteils (16A) aus der Sollposition angibt.

6. Verfahren nach einem der vorhergehenden Ansprüche, welches bei einer Revision nach der letztmaligen Handhabung des zu überprüfenden Kerneinbauteils (16A) und vor dem Aufsetzen des Deckels (4) des Reaktordruckbehälters (2) vorgenommen wird.

7. Verfahren nach einem der vorhergehenden Ansprüche, bei dem parallel zur Positionskontrolle eine Gängigkeitskontrolle durchgeführt wird, wobei die Positionskontrolle an einem jeweiligen Kerneinbauteil (16A) erst nach dessen Gängigkeitskontrolle erfolgt.

8. Verfahren nach einem der Ansprüche 2 bis 7 und 5, bei dem die lotrechte Ausrichtung und gegebenenfalls eine Justage des Fadenkreuzes (40) einmalig vor der ersten Positionsbestimmung und gleichzeitig mit einer weiteren Revisionsarbeit erfolgt.

9. Verfahren nach einem der vorhergehenden Ansprüche, bei dem die Positionsdaten des jeweiligen Kerneinbauteils (16A) für einen Vergleich mit den bei einer früheren oder zukünftigen Positionskontrolle erfassten Positionsdaten aufgenommen werden.

10. Vorrichtung (24) zur Positionskontrolle von Kerneinbauten (16,16A) in einer kerntechnischen Anlage, insbesondere zur Durchführung des Verfahrens nach einem der vorhergehenden Ansprüche, mit einem optischen System (32), welches umfasst eine Kamera (42) zur Aufnahme von Bilddaten, Mittel zur lotrechten Ausrichtung (56,58) der optischen Achse (34) der Kamera (42) und eine Zieloptik (44) zur Fokussierung.

11. Vorrichtung (24) nach Anspruch 10, bei der zur Fokussierung ein Zielfernrohr (44) vorgesehen ist.

12. Vorrichtung (24) nach Anspruch 10 oder 11, bei der in dem von der Kamera (42) erfassten Bildbereich ein justierbares Fadenkreuz (40) einblendbar ist.

13. Vorrichtung (24) nach einem der Ansprüche 10 bis 12, bei der die Kamera (42) und die Zieloptik (44) drehbar gehalten sind.
